Europäisches Patentamt

European Patent Office

Office européen des brevets

(19)

(11) Veröffentlichungsnummer: **0 255 510 B1**

# (12) EUROPÄISCHE PATENTSCHRIFT

(45) Veröffentlichungstag der Patentschrift: **22.05.91**

(51) Int. Cl.⁵: **E06B 3/96**

(21) Anmeldenummer: **87890183.4**

(22) Anmeldetag: **03.08.87**

Verbunden mit 87904798.3/0317562
(europäische
Anmeldenummer/Veröffentlichungsnummer)
durch Entscheidung vom 02.08.90.

(54) **Flügel- oder Stockrahmen und Verfahren zum Herstellen eines solchen.**

(30) Priorität: **01.08.86 AT 2088/86**

(43) Veröffentlichungstag der Anmeldung:
**03.02.88 Patentblatt 88/05**

(45) Bekanntmachung des Hinweises auf die
Patenterteilung:
**22.05.91 Patentblatt 91/21**

(84) Benannte Vertragsstaaten:
**AT BE CH DE ES FR GB GR IT LI LU NL SE**

(56) Entgegenhaltungen:
EP-A- 0 100 518          DE-A- 3 022 192
FR-A- 1 245 245          FR-A- 1 261 542
FR-A- 2 547 016          GB-A- 1 239 643
GB-A- 2 150 182          GB-A- 2 159 864
US-A- 3 429 602

(73) Patentinhaber: **INTERPROFIL GFK-Fenster &
Bausysteme Gesellschaft m.b.H.**

**A-3192 Hohenberg(AT)**

(72) Erfinder: **Wertitsch, Werner
Kärntnerstrasse 11
A-1010 Wien(AT)**
Erfinder: **Röck, Siegfried
Kärntnerstrasse 11
A-1010 Wien(AT)**

(74) Vertreter: **Sonn, Helmut et al
Patentanwälte Dipl.-Ing. Helmut Sonn, Dr.
Heinrich Pawloy, Dipl.-Ing. Arnulf Weinzinger
Riemergasse 14
A-1010 Wien(AT)**

## Beschreibung

Die Erfindung bezieht sich auf einen Flügeloder Stockrahmen, der aus Rahmenhohlprofilstücken und Eckverbindungswinkeln unter Einsatz eines Bindemittels zusammengefügt ist, wobei die Rahmenprofile duroplastische Kunststoffprofile sind, bei welchem Rahmen in den Verbindungsfugen bzw. Gehrungsfugen der Rahmenecken eine Fugenplatte angeordnet ist und die Eckverbindungswinkel mit diesen Fugenplatten integriert sind.

Ein mittels Eckverbindungswinkeln aus Rahmenhohlprofilstücken zusammengefügter Rahmen geht aus der FR-A-2 547 016 hervor. Jede Eckverbindung ist dabei mit einem einzigen Winkel gebildet, dessen Schenkel in je einen Hohlraum des Rahmenprofils eingeschoben sind. Es sind Schrauben oder Eindellungen des Profils zum Festhalten des Winkelschenkel vorgesehen. Die Eckwinkel tragen eine Fugenplatte, welche die Ränder des Profils an den Schnittflächen überdecken. Die Profile bestehen aus Metall oder aus einem anderen Werkstoff.

Ein ähnlicher Rahmen ist aus der GB-A-2 150 182 bekannt. Bei diesem bekannten Rahmen sind in den Kunststoffhohlprofilen, die aus einem nicht hinreichend stabilen Material, wie PVC, bestehen, Verstärkungsschienen aus Metall angeordnet und es sind die Eckverbindungswinkel mit diesen Verstärkungsschienen verschraubt. Die Verwendung eines Bindemittels ist nur zusätzlich in Betracht gezogen. Die Notwendigkeit Verstärkungsschienen vorzusehen und das Verschrauben der Eckverbindungswinkel mit diesen Verstärkungsschienen verursacht hohe Kosten und einen großen Zeitbedarf bei der Herstellung solcher Rahmen.

Aus der DE-A-30 22 192 ist eine Eckverbindung von Rahmenprofilen für Fenster, Türen oder dergl. bekannt, bei der die beiden an einer Ecke zusammenstoßenden Profile mit einem einfachen Eckwinkel, dessen Schenkel in je einen in den betreffenden Profilen vorgesehenen Hohlraum eingefügt werden, miteinander verbunden werden. Die Schenkel des Eckwinkels werden dabei mit den Profilen verklebt, wobei der Klebstoff durch eine in einem Rahmenprofil vorgesehene Öffnung nach dem Einstecken des Eckwinkels in die Profile eingebracht wird; zur Unterstützung der Verteilung des Klebstoffes sind an mindestens einer Seite der Schenkel des Eckwinkels Ausnehmungen vorgesehen. Es ist vorgesehen, zwei in dieser Weise zusammengefügte Rahmen miteinander über wärmedämmende Isolierstücke zu verbinden.

Aus der US-A-3 429 602 ist eine Eckverbindung für Rahmenprofile aus schweißbarem Leichtmetall bekannt, bei der zwei I-Profile, die in jedem Quersteg ein Paar nach außen offener hinterschnittener Nuten aufweisen, unter Zuhilfenahme von Winkelverbindungsstücken verbunden werden, die aus einer Verbindungswinkel tragenden Fugenplatte bestehen; die Schenkel dieser Verbindungswinkel werden in die genannten Nuten eingeschoben und von außen mit den Rahmenprofilen verschweißt und es wird auch die Fugenplatte mit dem Mittensteg der I-Profile verschweißt.

Es ist ein Ziel der vorliegenden Erfindung, einen Flügeloder Stockrahmen vorgenannter Art zu schaffen, dessen Eckverbindungen auf einfache Weise hergestellt werden können, wobei diese Eigenschaften insbesondere bei Rahmen aus duroplastischen Kunststoffprofilen mit längslaufenden Verstärkungsfasern erzielt werden sollen. Die zu schaffende Technik soll vor allem die Verarbeitung von Kunststoffprofilen aus glasfaserverstärktem Polyesterkunststoff zu stabilen und lange haltbaren Flügel- oder Stockrahmen für Fenster, Türen od. dergl. ermöglichen, wobei auch Profile in Betracht kommen sollen, welche auch in Querrichtung verlaufende oder ungerichtete Verstärkungsfasern, insbesondere Glasfasern enthalten, und auch duroplastische Profile, die nur ungerichtete Verstärkungsfasern, insbesondere Glasfasern, enthalten.

Der erfindungsgemäße Flügel- oder Stockrahmen eingangs erwähnter Art ist dadurch gekennzeichnet, daß an jeder Fugenplatte mehrere Eckverbindungswinkel vorgesehen sind, und zwar mindestens ein Eckverbindungswinkel, der an einer am Umfang des Profilquerschnittes gelegenen Stelle der beiden an der betreffenden Ecke des Rahmens zusammengefügten Rahmenhohlprofilstücke angeordnet ist, und mindestens ein in einen geschlossenen Hohlraum der an der betreffenden Ecke zusammengefügten Rahmenhohlprofilstücke eingefügter Eckverbindungswinkel, und daß in der jeweiligen Fugenplatte zur Bindemittelweiterleitung Kanäle vorgesehen sind, welche zu den Stellen, an denen die Eckverbindungswinkel angeordnet sind, führen wobei die Kanäle untereinander und mit mindestens einer am Umfang der Fugenplatte befindlichen Öffnung in Verbindung stehen. Durch diese Ausbildung kann der vorstehend angeführten Zielsetzung sehr gut entsprochen werden. Man kann durch diese Ausbildung problemlos eine gute Verteilung des Bindemittels über die Flächen, an denen die Eckverbindungswinkel und die Fugenplatte an den Hohlprofilstücken anliegen, erzielen und damit eine gut haltbare Verbindung herstellen. Es ist dabei möglich eine Klebe- bzw. Verbindungsmasse mit einem einzigen Einspritzvorgang an die zu verbindenden Flächen zu bringen. Es kann dadurch, daß mindestens ein Eckverbindungswinkel an einer am Umfang des Profilquerschnittes gelegenen Stelle der beiden an der betreffenden Ecke des Rahmens zusammengefügten Rahmenhohlprofilstücke angeordnet ist, auf einfache Weise eine maßexakte Ausbildung der Eckverbindungen und auch eine gute Stabilität der Eckverbindungen erzielt werden, weil die Außenfläche eines Kunststoffhohlprofils leichter exakt maßhaltig gefertigt werden kann, als die Wandflächen von Profilhohlräumen.

Eine bevorzugte Ausführungsform des erfindungsgemäß ausgebildeten Rahmens ist dadurch gekennzeichnet, daß die Fugenplatte bis an die Sichtfläche des Rahmens reicht. Es kann so eine gute vollflächige Verteilung des Bindemittels über die an den Ecken des Rahmens gelegenen Schnittflächen der Hohlprofilstücke und eine diese Schnittflächen ganz überdeckende Verbindung der Fugenplatten mit den Hohlprofilstücken erzielt werden, was nicht nur zum Erzielen einer guten Stabilität der Verbindung von Bedeutung ist, sondern auch für einen guten Abschluß der Schnittfläche der Rahmenhohlprofilstücke gegen Umwelteinflüsse sorgt. An den Schnittflächen der Profile werden ja die Enden von Verstärkungsfasern, die in den Profilen vorgesehen sind, durch das die Profile bildende Kunstharz weniger geschützt und es kann dadurch, daß man die Flächen gegen Umwelteinflüsse schützt, die Lebensdauer wesentlich verbessert werden. Zur Erzielung eines guten Abschlusses der an den Verbindungs- bzw. Gehrungsfugen gelegenen Schnittflächen der Flügel- oder Stockrahmen ist dabei eine Ausführungsform, welche dadurch gekennzeichnet ist, daß die Fugenplatte an ihrem Umfang, und zwar mindestens an den längs der Sichtflächen des Rahmens verlaufenden Umfangsabschnitte, seitlich vorstehende Randrippen aufweist, die die Umfangskanten der Rahmenhohlprofilstücke überdecken, besonderes vorteilhaft. So wird auch ein guter Schutz von Klebe- bzw. Verbindungsmitteln, welche zum Verbinden der an den Ecken der Rahmen vorliegenden Teile miteinander eingesetzt werden, gegenüber nachteiligen Umwelteinflüssen erzielt. Diese Ausführungsform läßt auch durch das übergreifen bzw. überdecken der Umfangskanten der Rahmenhohlprofilstücke durch die seitlich vorstehenden Randrippen der Fugenplatte auf einfache Weise ein sehr gutes Aussehen der Verbindungs- bzw. Gehrungsfugen erzielen. Es ist dabei weiter günstig, wenn man vorsieht, daß die Fugenplatte an ihrem Umfang einen quer zur Umfangsrichtung erhaben gewölbten Rand aufweist, der seitlich in die vorstehenden Randrippen übergeht. Besonders vorteilhaft ist es, wenn die Fugenplatte aus einem thermoplastischen Kunststoff, vorzugsweise einem thermoplastischen Polyester, besteht. Diese Ausführungsform ermöglicht es, auf sehr einfache Weise einen guten Anschluß des Randes der Fugenplatte an die Umfangskanten der Rahmenhohlprofilstücke zu erzielen, indem eine Fugenplatte, welche über die Umfangskanten nach außen vorsteht, in die Ecke eingesetzt wird und dann der Rand der Fugenplatte unter Erwärmung erweicht und gegen und über die Randkanten der Profile gedrückt wird. Es werden so auch in vorteilhafter Weise Profiltoleranzen und Verarbeitungstoleranzen ausgeglichen.

Die Erfindung bezieht sich auch auf ein Verfahren zur Herstellung eines Flügel- oder Stockrahmens vorgenannter Ausbildung, und es ist dieses Verfahren dadurch gekennzeichnet, daß die miteinander Ecken bildenden Rahmenhohlprofilstücke mit den mit einer Fugenplatte integrierten Eckverbindungswinkeln zusammengesteckt werden, daß vor oder nach diesem Zusammenstecken an einer an den Kanälen der Fugenplatte der betreffenden Ecke gelegenen Stelle mindestens eine Öffnung in den Rahmenhohlprofilstücken hergestellt wird und daß danach durch diese Öffnung eine erhärtende Klebe- bzw. Verbindungsmasse in die im Bereich des Verbindungs- bzw. Gehrungsstoßes liegenden Spalte zwischen den Rahmenhohlprofilstücken und den Eckverbindungswinkeln und Fugenplatten eingespritzt wird. Man kann auf diese Weise rasch und sicher die im Bereich der Rahmenecken miteinander zu verbindenden Teile aneinander fixieren, da beim Einspritzen der Klebe- bzw. Verbindungsmasse durch Anwendung entsprechend hohen Druckes und ausreichend fließfähiger Klebebzw. Verbindungsmassen die Spalte zwischen den miteinander in Verbindung zu setzenden Flächen sicher gefüllt werden können, wobei diese Einbringung der Klebe- bzw. Verbindungsmasse mit verhältnismäßig geringem Arbeitsaufwand vorgenommen werden kann. Als Klebe- bzw. Verbindungsmasse kann dabei im Prinzip eine Einkomponentenmasse, welche in dünner Schicht oder unter Anwendung von Wärme ausreichend rasch erhärtet, eingesetzt werden. Im Interesse eines raschen Ablaufes des Erhärtungsvorganges empfiehlt sich aber in vielen Fällen der Einsatz einer unter Einfluß eines Härters erhärtenden Klebe-bzw. Verbindungsmasse, wobei der Härter der Masse kurz vor dem Einspritzen in die Eckverbindung zugesetzt werden kann. Will man dabei Störungen in der zum Einspritzen dieser Masse benützten Einrichtung hintanhalten, muß für ein zügiges Passieren der mit dem Härter versetzten Masse Sorge getragen werden, da bei Verzögerungen ein Erhärten der Masse in der Einspritzeinrichtung eintreten kann. Um diese Gefahr auszuschließen, kann man vorteilhaft gemäß einer Ausführungsform des erfindungsgemäßen Verfahrens vor dem Einspritzen der Klebe-bzw. Verbindungsmasse in die Eckverbindung oder vor dem Zusammenfügen der Rahmenhohlprofilstücke mit den Eckverbindungswinkeln und Fugenplatten einen Härter auf die zu verbindenden Flächen auftragen, wobei dieses Auftragen z.B. durch Bestreichen oder Besprühen vorgenommen werden kann, und dann die Kleb- bzw. Verbindungsmasse ohne Härterzusatz einspritzen; es findet dann beim Einspritzen die Vereinigung des zuvor aufgetragenen Härters mit der Klebe- bzw. Verbindungsmasse statt und bringt diese Masse zum Erstarren. Eine weitere vorteilhafte Ausführungsform des erfindungsgemäßen Verfahrens ist dadurch gekennzeichnet, daß eine erhärtende Klebe-bzw. Verbindungsmasse und ein Härter oder Härtungsbeschleuniger gleichzeitig eingespritzt werden. Das Einspritzen kann dabei gegebenenfalls über zwei miteinander in Verbindung stehende öffnungen erfolgen.

Die erfindungsgemäße Technik ermöglicht auf einfache Weise die Ausbildung von sogenannten Stulpflügeln, also jenen Flügeln zweiflügeliger Fenster, welche eine Anschlagleiste für den Anschlag des zweiten Fensterflügels tragen. Eine diesbezügliche Ausführungsform des erfindungsgemäßen Flügelrahmens ist dadurch gekennzeichnet, daß der Rahmen ein rechteckiger Stulprahmen ist, der aus Rahmenhohlprofilstücken mit untereinander gleichem Querschnitt zusammengefügt ist, wobei eines der Rahmenhohlprofilstücke, nämlich das Stulpstück, um 180° um seine geometrische Längsachse in bezug auf das im Rahmen gegenüberliegende Rahmenhohlprofilstück verdreht angeordnet ist, daß die an den Enden des Stulpstückes gelegenen Gehrungsfugen nur über einen an das Innere des Rahmens anschließenden Teil der Profilbreite reichen und die an die Gehrungsfugen nach außen anschließenden Bereiche der an diesen Gehrungsfugen zusammengefügten Rahmenhohlprofilstücke vom äußeren Ende der Gehrungsfugen weg mit quer zur Längsachse des betreffenden Rahmenhohlprofilstückes verlaufenden ebenen Endflächen enden, und daß an die in den beiden an den Enden des Stulpstückes gelegenen Gehrungsfugen befindlichen Fugenplatten je zwei im rechten Winkel zueinander verlaufende Plattenteile anschließen, die an den quer zur Längsachse der betreffenden Rahmenhohlprofilstücke verlaufenden ebenen Endflächen der Rahmenhohlprofilstücke anliegen und mit diesen Endflächen verbunden sind. Es ist dabei vorteilhaft, daß der Rand dieser Plattenteile dem Rand der genannten Endflächen der Rahmenhohlprofilstücke mindestens an den Außen- bzw. Sichtflächen der Profile folgt. Weiters ist es vorteilhaft, daß diese Plattenteile über einen zwischen diesen Plattenteilen befindlichen profilierten übergangskörper miteinander verbunden sind, wobei die Profilierung dieses übergangskörpers nach der einen Seite hin mit der Profilierung des einen der an der betreffenden Stulpecke zusammenkommenden Rahmenhohlprofilstücke und nach der anderen Seite mit der Profilierung des anderen dieser Rahmenhohlprofilstücke fluchtet. Es wird dabei durch das Vorhandensein der Fugenplatte und durch das Vorhandensein der an den Endflächen der Rahmenhohlprofilstücke anliegenden Plattenteile mit dem übergangskörper, eine stabile Ausbildung der Eckverbindungen an den Enden des Stulpstückes, ein guter Abschluß der Stirnflächen der Rahmenhohlprofilstücke und auch im Bereich der Stulpecken eine gute Abdichtung der beiden Flügelrahmen zueinander und zum Stockrahmen erzielt. Die Eckverbindungswinkel können an den Stulpecken im Bedarfsfall gekröpt ausgebildet sein, d.h. daß die Schenkel dieser Winkel zueinander quer zur Rahmenebene versetzt sind. Um die Eckverbindung an den Stulpecken weiter zu verbessern ist es weiter vorteilhaft, wenn von den an den Endflächen der Rahmenhohlprofilstücke anliegenden Plattenteilen Ansätze ausgehen, welche in Hohlräume dieser Rahmenhohlprofilstücke eingesteckt sind.

Jener Eckverbindungswinkel, der an einer am Umfang des Profilquerschnittes gelegenen Stelle der beiden an der betreffenden Ecke des Flügels zusammengefügten Rahmenhohlprofilstücke angeordnet ist, wird vorzugsweise an einer an der Innenseite des Rahmens gelegenen Stelle des Umfanges des Profilquerschnittes vorgesehen. Dies ist hinsichtlich einer einfachen Montage des Rahmens vorteilhaft.

Die Erfindung wird nun unter Bezugnahme auf Beispiele, welche in der Zeichnung schematisch dargestellt sind, weiter erläutert.

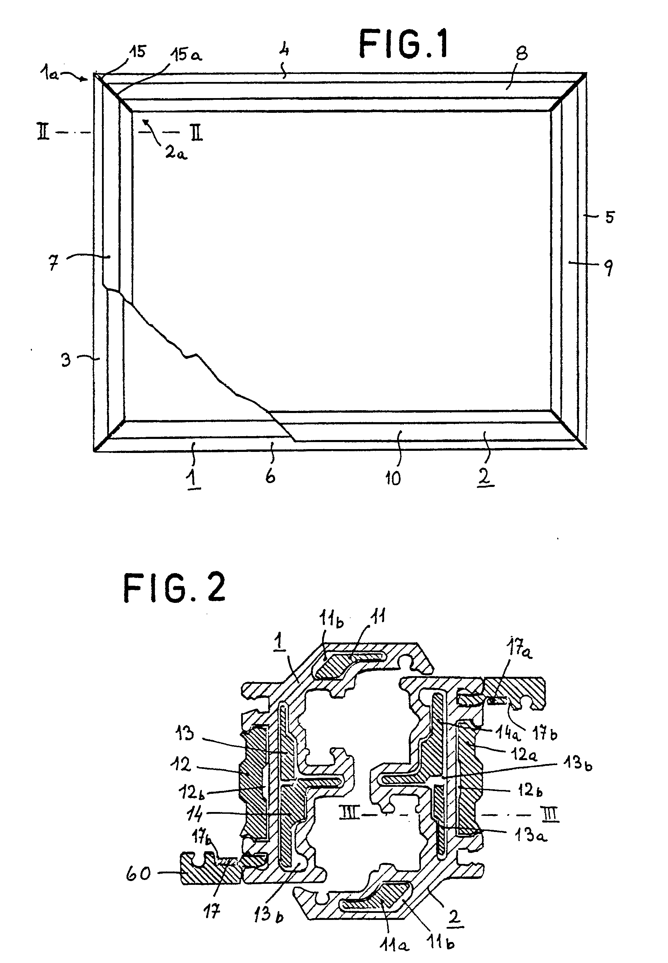

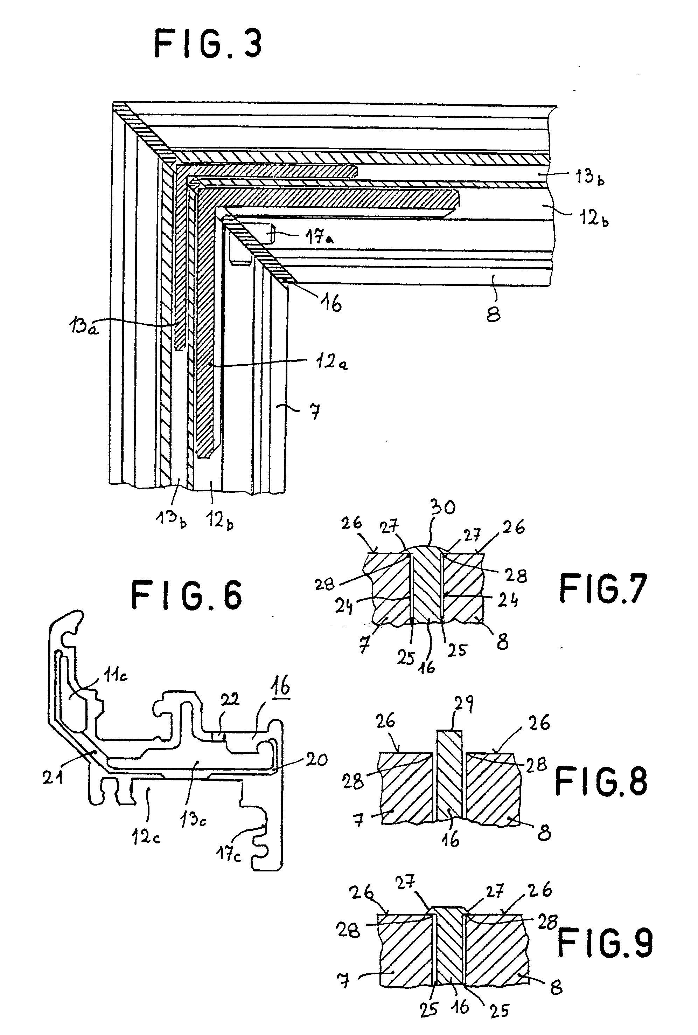

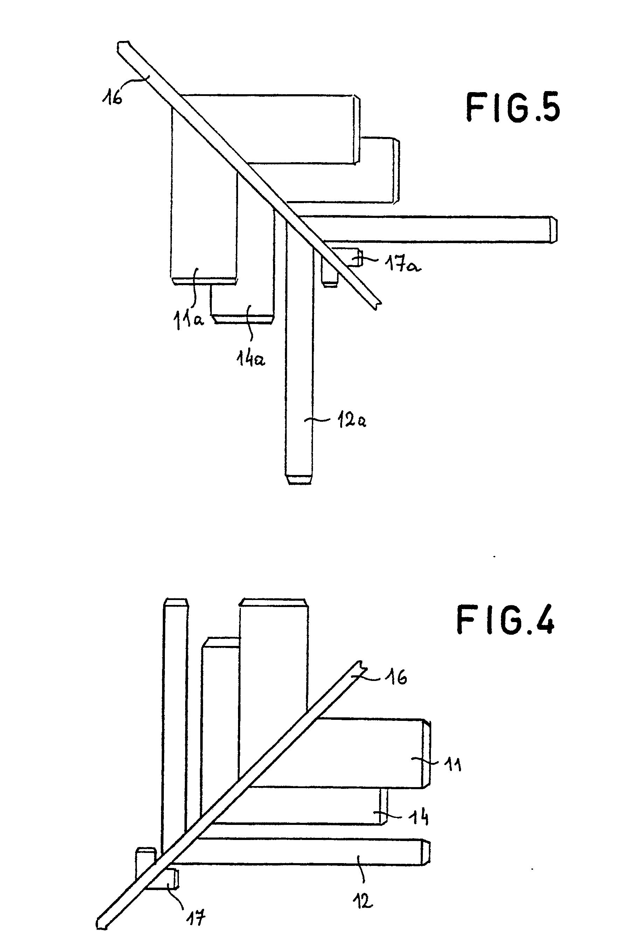

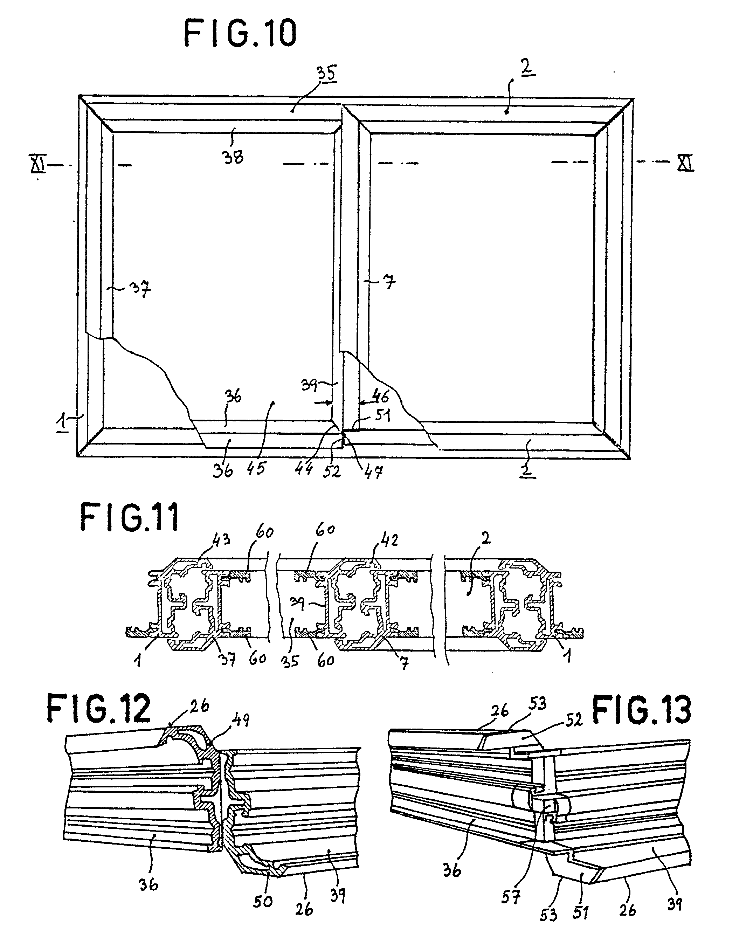

In der Zeichnung zeigt Fig. 1 einen Stockrahmen und einen diesem Stockrahmen zugeordneten Flügelrahmen, der in den Stockrahmen eingreift, in Ansicht von vorne, Fig. 2 diesen Stockrahmen und diesen Flügelrahmen im Schnitt gemäß der Linie II-II in Fig. 1, Fig. 3 den Eckbereich dieses Flügelrahmens in einem Schnitt gemäß der Linie III-III in Fig. 2, Fig. 4 eine Fugenplatte mit Eckverbindungswinkeln für den Stockrahmen in einer Ansicht senkrecht zur Rahmenebene, Fig. 5 eine Fugenplatte mit Eckverbindungswinkeln für den Flügelrahmen in einer der Fig. 4 entsprechenden Ansicht, Fig. 6 eine Fugenplatte für den Flügelrahmen in einer Ansicht in Rahmenprofillängsrichtung, Fig. 7 eine Schnittdarstellung einer Randzone mit eingefügter Fugenplatte, Fig. 8 in einer der Fig. 7 entsprechenden Darstellung eine solche Verbindungsfuge mit eingefügter Fugenplatte in einem Stadium der Herstellung der Verbindung, Fig. 9 diesen Bereich nach Fertigstellung der Verbindung, Fig. 10 einen Stockrahmen, in den zwei Flügelrahmen eingreifen, nämlich ein Stulprahmen und ein gewöhnlicher Flügelrahmen, in einer Ansicht, Fig. 11 diese Rahmen im Schnitt gemäß der Linie XI-XI in Fig. 10, Fig. 12 die an einer Stulpecke eines Stulprahmens aneinanderzufügenden Hohlprofilstücke ohne Verbindungselemente in einer Ansicht und Fig. 13 die mit Verbindungselementen versehene Stulprahmenecke gleichfalls in einer Ansicht.

Die in den Fig. 1 bis 3 dargestellten Rahmen, nämlich der Stockrahmen 1 und der Flügelrahmen 2 sind aus Rahmenhohlprofilstücken 3, 4, 5, 6 bzw. 7, 8, 9, 10 zusammengefügt. Die Rahmenhohlprofile sind duroplastische Kunststoffprofile mit in Längsrichtung verlaufenden Verstärkungsfasern. Die Rahmen 1, 2 sind in den Rahmenecken 1a bzw. 2a mit Eckverbindungswinkeln und unter Einsatz eines Bindemittels zusammengefügt. Die Eckverbindungswinkel sind in offene Hohlräume 12b, 17b und in geschlossene Hohlräume 11b, 13b der Rahmenhohlprofilstücke eingefügt, wobei zur Verbindung der Rahmenecken 1a des Stockrahmens Eckverbindungswinkel 11, 12, 17, 13, 14 und zum Verbinden der Rahmenecken 2a des Flügelrahmens 2 Eckverbindungswinkel 11a, 12a, 13, 14a, 17a in die Hohlräume 11b, 12b, 13b eingefügt sind. In Verbindungsfugen 15 des Stockrahmens 1 bzw. Verbindungsfugen 15a des Flügelrahmens 2 sind Fugenplatten 16 angeordnet und es sind die Eckverbindungswinkel und die Fugenplatten miteinander zu einstückigen Körpern integriert. Ausführungsformen solcher Körper sind in den Fig. 4 und 5 dargestellt. Es können dabei die Eckverbindungswinkel und die Fugenplatten z.B. gemeinsam aus Kunststoff oder Metall gepreßt oder gespritzt sein. Bevorzugt bestehen solche Körper aus einem faserverstärkten, thermoplastischen Kunststoff; es kommen aber auch duroplastische Kunststoffe in Betracht; auch duroplastische Kunststoffe können dabei mit Fasern verstärkt sein.

In den Fugenplatten 16 sind Kanäle 20, 21 vorgesehen, welche eine Verbindung von einer am Umfang der betreffenden Fugenplatte vorgesehenen öffnung 22 zu den Stellen, an denen die Eckverbindungswinkel angeordnet sind, bilden. Es kann dabei wie in dem in Fig. 6 dargestellten bevorzugten Fall eine öffnung 22 am Umfang der Fugenplatte vorgesehen sein, von der die Kanäle 20, 21 mittelbar oder unmittelbar ausgehen; man kann aber auch mehrere solche öffnungen anordnen und so mehrere Anspeisestellen für die Kanäle 20, 21 schaffen, wobei diese Kanäle denn gegebenenfalls auch voneinander getrennt sein können.

Die Stellen bzw. Bereiche der Fugenplatten 16, an denen die Eckverbindungswinkel angeordnet sind, sind in Fig. 6 mit 11c. 12c, 13c und 17c bezeichnet.

Durch die Kanäle 20, 21 kann ein Bindemittel, also eine Klebe- bzw. Verbindungsmasse, welche durch die öffnung 22 eingebracht, insbesondere unter hohem Druck eingespritzt wird, in Spalte, welche sich zwischen den Hohlräumen 11b, 12b, 13b der Rahmenhohlprofilstücke und den in diese Hohlräume eingesteckten Eckverbindungswinkeln 11, 12, 13, 14, 17 bzw. 11a, 12a, 13a, 14a, 17a befinden, und auch in die zwischen den Fugenplatten 16 und den an diesen anstoßenden Endflächen der Rahmenhohlprofilstücke befindlichen Spalte eingebracht werden. Eine solche Öffnung 22 kann vor oder nach dem Zusammenstecken der Rahmenhohlprofilstücke mit dem an der betreffenden Ecke vorgesehenen Körper, der Eckwinkel und Fugenplatte integriert, hergestellt werden. Diese Öffnung kann z.B. gebohrt oder gefräst werden. Nach dem Erhärten der Klebe- bzw. Verbindungsmasse ist an den Rahmenecken eine festgefügte Verbindung der dort befindlichen Elemente des Rahmenaufbaues hergestellt. Man kann ergänzend dazu die Eckverbindungswinkel mit den Rahmenhohlprofilstücken auch durch mechanische Verbinder, wie z.B. Schrauben oder Nieten, zusammenfügen. Dabei kann man diese Verbinder so anordnen, daß sie von einem Eckverbindungswinkel ausgehen, eine Wand eines Rahmenhohlprofilstückes durchqueren und anschließend einen weiteren Eckverbindungswinkel erfassen, wobei eine solche Technik einen besonders guten Halt bzw. eine besonders gute Verankerung der Eckverbindungswinkel in den Rahmenhohlprofilstücken erzielen läßt.

Die Fugenplatten 16 überdecken die ihnen zugewendeten Endflächen 24 der Rahmenhohlprofilstücke und es werden damit diese Endflächen 24, an denen die Enden der Verstärkungsfasern freiliegen, durch die Fugenplatten und auch durch die Klebe- bzw. Verbindungsmasse, die in die Spalte 25 zwischen den Endflächen 24 und den Fugenplatten 16 eingebracht ist, geschützt. Die Fugenplatten reichen bis an die Sichtflächen 26 des betreffenden Rahmens und es ist besonders vorteilhaft, die Fugenplatten 16 an ihrem Umfang und zwar mindestens an den längs der Sichtflächen 26 des betreffenden Rahmens verlaufenden Umfangsabschnitten, mit seitlichen vorstehenden Randrippen 27 zu versehen, welche die Umfangskanten 28 der an die betreffende Fugenplatte angrenzenden Rahmenhohlprofilstücke überdecken. Es ist dabei aus mechanischen Gründen und zum Erzielen eines gefälligen Aussehens vorteilhaft, wenn die Fugenplatten an ihrem Umfang einen quer zur Umfangsrichtung erhaben gewölbten Rand 30 aufweisen, der seitlich in die vorstehenden Randrippen 27 übergeht, wie dies in Fig. 7 dargestellt ist.

Man kann die vorerwähnten Randrippen 27 am Umfang der Fugenplatten 16 bei der Herstellung der Fugenplatten vorsehen. Man kann aber auch, wenn die Fugenplatten aus einem thermoplastischen Kunststoff bestehen, diese Fugenplatten 16 zunächst etwas größer bemessen und in dieser Form zwischen die miteinander zu verbindenden Rahmenhohlprofilstücke setzen, sodaß der Umfang 29 der Fugenplatte 16 über die Umfangskanten 28 der Rahmenhohlprofilstücke hinausreicht, wie dies in Fig. 8 dargestellt ist, und danach den Umfang der Fugenplatten erwärmen und niederdrücken, sodaß das erwärmte Material der Fugenplatten über die Umfangskanten 28 der Endfläche 24 der Rahmenhohlprofilstücke fließt; es bilden sich auf diese Weise Randrippen 27, welche die Umfangskanten 28 übergreifen bzw. überdecken. Auf diese Weise kann auch ein guter Ausgleich von Fertigungstoleranzen erzielt werden. Für eine solche Technik sind Fugenplatten, die aus einem thermoplastischen Polyester hergestellt sind, besonders gut geeignet. Das Erwärmen und Niederdrücken des Umfangsrandes der Fugenplatten kann am einfachsten mit einem entsprechend aufgeheizten Werkzeug vorgenommen werden. Je nach der Form dieses Werkzeuges kann dabei ein flach verlaufender Umfangsrand, wie er in Fig. 9 dargestellt ist, oder auch ein erhaben gewölbter Rand nach Fig. 7 erhalten werden.

Bei der in den Fig. 10 und 11 dargestellten Ausführungsform eines Stockrahmens 1 mit zwei in diesen Stockrahmen eingreifenden Flügelrahmen ist einer dieser Flügelrahmen, der Rahmen 2, als gewöhnlicher Flügelrahmen ausgebildet, analog wie bei der Ausführungsform nach Fig. 1, während der andere Flügelrahmen ein Stulprahmen 35 ist. Dieser Stulprahmen bildet an seiner dem Flügelrahmen 2 zugewendeten Seite für den Flügelrahmen 2 einen Anschlag, wie er an den übrigen drei Seiten des Flügelrahmens 2 durch den Stockrahmen 1 gegeben ist. Der Stulprahmen 35 ist aus Rahmenhohlprofilstücken 36, 37. 38, 39 zusammengefügt, wobei eines dieser Rahmenhohlprofilstücke, nämlich das Stulpstück 39, welches an der dem Flügelrahmen 2 zugewandten Seite liegt, um 180° um seine geometrische Längsachse 40 in bezug auf die Stellung des dem Stulpstück 39 gegenüberliegenden Rahmenhohlprofilstückes 37 verdreht angeordnet ist. Es kann so der Schenkel 42 des Stulpstückes 39 einen Anschlag für das Rahmenhohlprofilstück 7 des Flügelrahmens 2 bilden, analog wie der Anschlag, den die Schenkel 43 der Rahmenhohlprofilstücke des Stockrahmens 1 für die beiden Flügelrahmen 2, 35 bilden. die sich dabei ergebende Lage des Stulpstückes 39 in bezug auf ein daran anschließendes Rahmenhohlprofilstück des Stulprahmens 35 ist aus Fig. 12 unmittelbar ersichtlich.

Die an den Enden des Stulpstückes 39 gelegenen Gehrungsfugen 44 reichen nur über einen an das Innere 45 des Rahmens 35 anschließenden Teil der Profilbreite 46 und es enden die an diesen Gehrungsfugen 44 zusammengefügten Rahmenhohlprofilstücke 39, 38 bzw. 39, 36 vom äußeren Ende der Gehrungsfugen 44 weg mit ebenen Endflächen 49, 50, die quer zur Längsachse des betreffenden Rahmenhohlprofilstückes 39, 38, 36 verlaufen. Die in den Gehrungsfugen 44 angeordneten Fugenplatten 16 weisen an die äußeren Enden 47 der Gehrungsfugen 44 anschließend je zwei im rechten Winkel zueinander verlaufende Plattenteile 51, 52 auf, die an den ebenen Endflächen 49, 50 anliegen. Der Rand 53 der Plattenteile 51, 52 verläuft mindestens an den Außen- bzw. Sichtflächen 26 der Profilstücke 39, 38, 36 längs des Randes 55 der ebenen Endflächen 49, 50 der Rahmenhohlprofilstücke 39, 38, 36. An der Innenseite der Rahmenhohlprofilstücke stehen die Plattenteile 51, 52 teilweise ein wenig über einzelne Profilierungsvertiefungen dieser Rahmenhohlprofilstücke vor. Die Plattenteile 51, 52 gehen in einen zwischen diesen Plattenteilen befindlichen profilierten übergangskörper 57 über, wobei die Profilierung dieses übergangskörpers nach der einen Seite hin mit der Profilierung des Stulpstückes 39 und nach der anderen Seite hin mit der Profilierung des anderen an dieser Stulpecke befindlichen Rahmenhohlprofilstückes 38 bzw. 36 fluchtet, wie dies aus Fig. 13 ersichtlich ist.

Zur innigen Verbindung der Plattenteile 51, 52 mit den an der betreffenden Ecke des Stulprahmens vorliegenden Rahmenhohlprofilstücken werden vorteilhaft an diesen Plattenteilen Ansätze vorgesehen, welche in Hohlräume dieser Rahmenhohlprofilstücke eingesteckt sind, wobei diese Ansätze den Zusammenhalt der erwähnten Plattenteile 51, 52 mit den Rahmenhohlprofilstücken verbessern und durch die Verbindung dieser Plattenteile 51, 52 miteinander über den übergangskörper 57 auch in Art der Schenkel von Eckverbindungswinkeln die Festigkeit der Eckverbindung erhöhen. Ein solcher Ansatz am Plattenteil 51 bildet zusammen mit einem solchen Ansatz am Plattenteil 52 einen Eckwinkel. Zur Verbindung der Plattenteile 51, 52 bzw. der an diesen angeordneten Ansätze mit den Rahmenhohlprofilstücken wird in die zwischen diesen Elementen gegebenen Spalte eine Klebe- bzw. Verbindungsmasse eingebracht und man kann gegebenenfalls ergänzend dazu zum Verbinden auch mechanische Verbinder, wie z.B. Schrauben oder Nieten, einsetzen.

Es ist im Interesse einer exakten Positionierung der an den Ecken der Rahmen vorliegenden Enden der Rahmenhohlprofilstücke zueinander besonders günstig, wenn man, wie dies in den dargestellten Beispielen durch die Eckverbindungswinkel 12, 12a realisiert ist, Eckverbindungswinkel vorsieht, welche an einer am Umfang des Profilquerschnittes gelegenen Stelle der beiden an der betreffenden Ecke des Flügels zusammengefügten Rahmenhohlprofilstücke angeordnet sind. Eine solche Anordnung mindestens eines Eckwinkels ergibt den Vorteil einer leichten Zugänglichkeit, was insbesondere dann von Bedeutung ist, wenn ein solcher Eckwinkel mit mechanischen Befestigungsmitteln, wie z.B. Schrauben oder Nieten, befestigt werden soll und es hat diese Plazierung den weiteren Vorteil, daß am Umfang des Profilquerschnittes Anliegeflächen auf einfache Weise enger toleriert gefertigt werden können, als in Hohlräumen, welche im Inneren eines Profiles liegen. Im Intersse einer einfachen Montage wird eine Anbringung solcher Eckverbindungswinkel 12, 12a an einer an der Innenseite des Rahmens gelegenen Stelle des Umfanges des Profilquerschnittes des betreffenden Rahmenhohlprofilstückes bevorzugt.

Durch die vorstehend erörterte Stellung des Stulpstückes 39 in bezug auf die anderen Rahmenhohlprofilstücke 36, 37, 38 des Stulprahmens 35 ist es für die Zugänglichkeit der Rahmeninnenseite zum Einbau einer Verglasung od. dgl. besonders vorteilhaft, wenn mindestens eine vorzugsweise aber beide Halteleisten 60 nachträglich in die den Rahmen bildenden Hohlprofilstücke eingesetzt sind, wie dies in der Zeichnung dargestellt ist. Durch in den Ecken des Rahmens vorgesehene Gehrungsstöße sind diese Leisten gegen unerwünschtes Lösen formschlüssig gesichert.

## Ansprüche

1. Flügel- oder Stockrahmen, der aus Rahmenhohlprofilstücken (3-6; 7-10) und Eckverbindungswinkeln (11-14; 17; 11a-14a, 17a) unter Einsatz eines Bindemittels zusammengefügt ist, wobei die Rahmenprofile duroplastische Kunststoffprofile sind, bei welchem Rahmen (1; 2) in den Verbindungsfugen bzw. Gehrungsfugen (15; 15a) der Rahmenecken (1a; 2a) eine Fugenplatte (16) angeordnet ist und die Eckverbindungswinkel mit diesen Fugenplatten integriert sind, dadurch gekennzeichnet, daß an jeder Fugenplatte mehrere Eckverbindungswinkel (11-14, 17; 11a-14a, 17a) vorgesehen sind, und zwar mindestens ein Eckverbindungswinkel (12; 12a), der an einer am Umfang des Profilquerschnittes gelegenen Stelle der beiden an der betreffenden Ecke des Rahmens zusammengefügten Rahmenhohlprofilstücke angeordnet ist, und mindestens ein in einen geschlossenen Hohlraum (11b, 13b) der an der betreffenden Ecke zusammengefügten Rahmenhohlprofilstücke eingefügter Eckverbindungswinkel (11, 13, 14; 11a, 13a, 14a), und daß in der jeweiligen Fugenplatte (16) zur Bindemittelweiterleitung Kanäle (20, 21) vorgesehen sind, welche zu den Stellen, an denen die Eckverbindungswinkel (11-14, 17; 11a-14a, 17a) angeordnet sind, führen, wobei die Kanäle (20. 21) untereinander und mit mindestens einer am Umfang der Fugenplatte befindlichen Öffnung (22) in Verbindung steht.

2. Flügel- oder Stockrahmen nach Anspruch 1, dadurch gekennzeichnet, daß die Fugenplatte (16) bis an die Sichtflächen (26) des Rahmens (1; 2) reicht.

3. Flügel- oder Stockrahmen nach Anspruch 2, dadurch gekennzeichnet, daß die Fugenplatte (16) an ihrem Umfang, und zwar mindestens an den längs der Sichtflächen (26) des Rahmens (1; 2) verlaufenden Umfangsabschnitten, seitlich vorstehende Randrippen (27) aufweist, die die Umfangskanten (28) der Rahmenhohlprofilstücke überdecken.

4. Flügel- oder Stockrahmen nach Anspruch 3, dadurch gekennzeichnet, daß die Fugenplatte (16) an ihrem Umfang einen quer zur Umfangsrichtung erhaben gewölbten Rand (30) aufweist, der seitlich in die vorstehenden Randrippen (27) übergeht.

5. Flügel- oder Stockrahmen nach einem der Ansprüche 1 bis 4, dadurch gekennzeichnet, daß die Fugenplatte (16) aus einem thermoplastischen Kunststoff, vorzugsweise einem thermoplastischen Polyester, besteht.

6. Flügelrahmen nach einem der Ansprüche 1 bis 5, dadurch gekennzeichnet, daß der Rahmen ein rechteckiger Stulprahmen (35) ist, der aus Rahmenhohlprofilstücken (36-39) mit untereinander gleichem Querschnitt zusammengefügt ist, wobei eines der Rahmenhohlprofilstücke, nämlich das Stulpstück (39), um 180° um seine geometrische Längsachse (40) in bezug auf das im Rahmen (35) gegenüberliegende Rahmenhohlprofilstück (37) verdreht angeordnet ist, daß die an den Enden des Stulpstückes (39) gelegenen Gehrungsfugen (44) nur über einen an das Innere (45) des Rahmens (35) anschließenden Teil der Profilbreite (46) reichen und die an die Gehrungsfugen (44) nach außen anschließenden Bereiche der an diesen Gehrungsfugen zusammengefügten Rahmenhohlprofilstücke vom äußeren Ende (47) der Gehrungsfugen weg mit quer zur Längsachse des betreffenden Rahmenhohlprofilstückes verlaufenden ebenen Endflächen (49, 50) enden, und daß an die in den beiden an den Enden des Stulpstückes gelegenen Gehrungsfugen (44) befindlichen Fugenplatten (16) je zwei im rechten Winkel zueinander verlaufende Plattenteile (51, 52) anschließen, die an den quer zur Längsachse der betreffenden Rahmenhohlprofilstücke verlaufenden ebenen Endflächen (49, 50) der Rahmenhohlprofilstücke anliegen und mit diesen Endflächen (49, 50) verbunden sind.

7. Flügelrahmen nach Anspruch 6, dadurch gekennzeichnet, daß daß der Rand (53) der Plattenteile (51, 52) dem Rand der genannten Endflächen (49, 50) der Rahmenhohlprofilstücke (36, 38, 39) mindestens an den Außen-bzw. Sichtflächen (26) der Profile (36, 38, 39) folgt.

8. Flügelrahmen nach Anspruch 6 oder 7, dadurch gekennzeichnet, daß die Plattenteile (51, 52) über einen zwischen diesen Plattenteilen befindlichen profilierten übergangskörper (57) miteinander verbunden sind, wobei die Profilierung dieses übergangskörpers (57) nach der einen Seite hin mit der Profilierung des Stulpstückes (39) und nach der anderen Seite mit der Profilierung des anderen an dieser Stulpecke befindlichen Rahmenhohlprofilstückes (36, 38) fluchtet.

9. Flügelrahmen nach einem der Ansprüche 6 bis 8, dadurch gekennzeichnet, daß von den an den Endflächen (49, 50) der Rahmenhohlprofilstücke (36, 38, 39) anliegenden Plattenteilen Ansätze ausgehen, welche in Hohlräume dieser Rahmenhohlprofilstücke eingesteckt sind.

10. Flügelrahmen nach einem der Ansprüche 6 bis 9, bei dem das Rahmenhohlprofil an der dem Inneren des Rahmens (35) zugewandten Seite mit zwei Halteleisten (60) zum Festhalten einer Verglasung versehen ist, dadurch gekennzeichnet, daß mindestens eine, vorzugweise aber beide Halteleisten (60) nachträglich in die den Rahmen bildenden Hohlprofilstücke eingesetzt sind.

11. Flügel- oder Stockrahmen nach einem der Ansprüche 1 bis 10, dadurch gekennzeichnet, daß jener Eckverbindungswinkel (12, 12a) der an einer am Umfang des Profilquerschnittes gelegenen Stelle der beiden an der betreffenden Ecke des Flügels zusammengefügten Rahmenhohlprofilstücke angeordnet ist, an einer an der Innenseite des Rahmens gelegenen Stelle des Umfanges des Profilquerschnittes sitzt.

12. Verfahren zum Herstellen eines Flügel- oder Stockrahmens nach einem der Ansprüche 1 bis 11, dadurch gekennzeichnet, daß die miteinander Ecken bildenden Rahmenhohlprofilstücke mit den mit einer Fugenplatte integrierten Eckverbindungswinkeln zusammengesteckt werden, daß danach eine erhärtende Klebe- bzw. Verbindungsmasse in die im Bereich des Verbindungs- bzw. Gehrungsstoßes liegende Spalte zwischen den Rahmenhohlprofilstücken und den Eckverbindungswinkeln und Fugenplatten eingespritzt wird, wobei dieses Einspritzen durch die an der Fugenplatte befindliche Öffnung vorgenommen wird, oder vor oder nach dem Zusammenstecken der Rahmenhohlprofilstücke mit den Eckverbindungswinkeln an einer an den Kanälen der Fugenplatte der betreffenden Ecke gelegenen Stelle mindestens eine Öffnung in den Rahmenhohlprofilstücken hergestellt wird und durch diese Öffnung das Einspritzen der Klebe bzw. Verbindungsmasse vorgenommen wird.

13. Verfahren nach Anspruch 12, dadurch gekennzeichnet, daß eine unter dem Einfuß eines Härters erhärtende Klebe- bzw. Verbindungsmasse eingespritzt wird und daß zuvor, z.B. durch Bestreichen oder Besprühen, ein Härter auf die zu verbindenden Flächen aufgetragen wird.

14. Verfahren nach Anspruch 12, dadurch gekennzeichnet, daß eine erhärtende Klebe-bzw. Verbindungsmasse und ein Härter oder Härtungsbeschleuniger gleichzeitig eingespritzt werden.

15. Verfahren nach Anspruch 14, dadurch gekennzeichnet, daß das Einspritzen über zwei miteinander in Verbindung stehende öffnungen erfolgt.

## Claims

1. Leaf or casement frame which is fitted together from hollow section frame pieces (3-6; 7-10) and corner connecting angles (11-14; 17; 11a-14a, 17a) with insertion of a bonding medium whereby the frame sections are duroplastic synthetic material sections in which frame (1; 2) a joint plate (16) is disposed in connecting joints or mitre joints (15; 15a) of the frame corners (1a; 2a) and the corner connecting angles are integrated with these joint plates, characterised in that on each joint plate several corner connecting angles (11-14, 17; 11a-14a, 17a) are provided and in fact at least one corner connecting angle (12; 12a) which is disposed at a place of the two hollow section frame pieces fitted together on the respective corner of the frame located on the periphery of the profiled cross section and at least one corner connecting angle (11, 13, 14; 11a, 13a, 14a) inserted in a closed hollow space (11b, 13b) of the hollow section frame piece joined to the respective corner and in that in the respective joint plate (16), for the further conveying of the bonding medium, channels (20, 21) are provided which lead to the places at which the corner connecting angles (11-14, 17; 11a-14a, 17a) are disposed whereby the channels are in communication with one another and with at least one opening (22) located on the periphery of the joint plate.

2. A leaf or casement frame according to claim 1, characterised in that the joint plate (16) reaches as far as the visible faces (26) of the frame (1; 2).

3. A leaf or casement frame according to claim 2, characterised in that the joint plate (16) has on its periphery and in fact at least on the peripheral sections running along the visible faces (26) of the frame (1; 2) laterally projecting edge ribs (27) which overlap the peripheral edges (28) of the hollow section frame pieces.

4. A leaf or casement frame according to claim 3, characterised in that the joint plate (16) has on its periphery a raised arched edge (30) crosswise to the peripheral direction which merges laterally into the projecting edge ribs (27).

5. A leaf or casement frame according to one of the claims 1 to 4, characterised in that the joint plate (16) consists of a thermoplastic synthetic material preferably a thermoplastic polyester.

6. A leaf frame according to one of the claims 1 to 5, characterised in that the frame is a rectangular frame (35) which is fitted together from hollow section frame pieces (36-39) with the same cross section as one another whereby one of the hollow section frame pieces (36-39) namely, the upturned piece (39) is turned by 180° around its geometrical longitudinal axis (40) in respect of the hollow section frame piece (37) lying opposite in the frame (35) in that the mitre joints (44) located at the ends of the piece (39) reach over only a part of the section width (46) connecting with the inside (45) of the frame (35) and the areas of the hollow section frame pieces joined to these mitre joints connecting outwards with the mitre joints (44) terminate away from the outer end (47) of the mitre joints with flat end faces (49, 50) running crosswise to the longitudinal axis of the respective hollow section frame pieces and in that on the joint plates (16) located in the two mitre joints (44) placed at the ends of the turned up piece each two connect with plate parts (51, 52) running at right angles to one another which lie near the flat end faces (49, 50) running crosswise to the longitudinal axis of the respective hollow section frame pieces and are connected to these end faces (49, 50).

7. A leaf frame according to claim 6, characterised in that the edge (53) of the plate parts (51, 52) follows the edge of the said end faces (49, 50) of the hollow section frame pieces (36, 38, 39) at least on the outer or visible faces (26) of the sections (36, 38, 39).

8. A leaf frame according to claim 6 or 7, characterised in that the plate parts (51, 52) are connected to one another via a profiled transition body (57) located between these plate parts whereby the profiling of this transition body (57) to one side aligns with the profiling of the turned up piece (39) and on the other side with the profiling of the other hollow section frame piece (36, 38) located at this corner.

9. A leaf frame according to claims 6 to 8, characterised in that from the plate parts adjoining the end faces (49, 50) of the hollow section frame pieces (36, 38, 39) added pieces eminate which are stuck into hollow spaces of these hollow section frame pieces.

10. A leaf frame according to one of the claims 6 to 9, in which the hollow section frame on the side turned towards the inside of the frame (35) is provided with two holding strips (60) for holding glazing, characterised in that at least one, preferably however both holding strips (60) are inserted later in the hollow section frame pieces.

11. A leaf or casement frame according to one of the claims 1 to 10, characterised in that the corner connecting angle (12, 12a) which is disposed at a place of the two hollow section pieces joined to the respective corner of the leaf, located on the periphery of the cross section of the section sits at a place of the periphery of the cross section of the section situated on the inner side of the frame.

12. A process for the manufacture of a leaf or casement frame according to one of the claims 1 to 11, characterised in that the hollow section frame pieces forming with one another corners are put together with the corner connecting angles integrated with a joint plate in that afterwards a hardening or bonding mass is injected into gaps lying in the area of the bonding or mitre impact between the hollow section frame pieces and the corner connecting angles and joint plates whereby this injection is effected through the opening located on the joint plate or before or after the putting together of the hollow section frame pieces with the corner connecting angles at a place located on the channels of the joint plate of the respective corner at least one opening is made in the hollow section frame pieces and through this opening the injection of the adhesive or bonding mass is effected.

13. A process according to claim 12, characterised in that an adhesive or bonding mass is injected under the influence of a hardener and that previously, for example, by painting or spraying, a hardener is applied to the faces to be bonded.

14. A process according to claim 12, characterised in that a hardening adhesive or bonding mass and a hardener or hardening accelerator are injected in at the same time.

15. A method according to claim 14 characterised in that the injecting is effected via two openings in communication with one another.

**Revendications**

1. Cadre de battant ou de dormant, qui est constitué à partir d'éléments proilés creux de cadre (3-6; 7-10) et de cornières d'assemblage d'angles (11-14; 17; 11a-14a,17a) en utilisant un produit adhésif, les profilés de cadre étant des profilés en matière plastique thermodurcissable, cadre (1; 2) dans lequel une plaque de joint (16) est disposée dans les joints d'assemblage ou joints à onglets (15; 15a) des coins du cadre (1a; 2a), et les cornières d'assemblage d'angles sont incorporées à ces plaques de joint, caractérisé en ce que plusieurs cornières d'assemblage d'angles (11-14,17; 11a-14a,17a) sont prévues sur chaque plaque de joint, à savoir au moins une cornière d'assemblage d'angle (12; 12a) disposée en un endroit situé sur la périphérie de la section de profil des deux éléments profilés creux de cadre réunis au coin concerné du cadre, et au moins une cornière d'assemblage d'angle (11,13,14; 11a,13a,14a) insérée dans une cavité fermée (11b,13b) des éléments profilés creux de cadre réunis au coin concerné, et en ce que des canaux (20,21) sont prévus dans la plaque de joint respective (16) pour propager le produit adhésif, canaux qui mènent aux endroits où sont disposées les cornières d'assemblage d'angles (11-14,17; 11a-14a,17a), et qui communiquent entre eux et avec au moins une ouverture (22) qui se trouve sur la périphérie de la plaque de joint.

2. Cadre de battant ou de dormant selon la revendication 1, caractérisé en ce que la plaque de joint (16) s'étend jusqu' aux faces visibles (26) du cadre (1; 2).

3. Cadre de battant ou de dormant selon la revendication 2, caractérisé en ce que la plaque de joint (16) présente sur sa périphérie, à savoir au moins sur les parties de la périphérie qui s'étendent le long des faces visibles (26) du cadre (1; 2), des nervures de bords (27) qui dépassent latéralement et recouvrent les arêtes périphériques (28) des éléments profilés creux de cadre.

4. Cadre de battant ou de dormant selon la revendication 3, caractérisé en ce que la plaque de joint (16) présente, sur sa périphérie, un bord bombé (30), en relief perpendiculairement à la direction périphérique, qui se raccorde latéralement aux nervures de bord en saillie (27).

5. Cadre de battant ou de dormant selon l'une des revendications 1 à 4, caractérisé en ce que la plaque de joint (16) est réalisée en matière thermoplastique, de préférence un polyester thermoplastique.

6. Cadre de battant ou de dormant selon l'une des revendications 1 à 5, caractérisé en ce que le cadre est un cadre à recouvrement rectangulaire (35), qui est constitué d'éléments profilés creux de cadre (36-39) de sections identiques, un des éléments profilés creux de cadre, à savoir l'élément de recouvrement (39), étant disposé tourné à 180° autour de son axe géométrique longitudinal (40) par rapport à l'élément profilé creux de cadre (37) qui lui fait face dans le cadre (35), en ce que les joints à onglets (44), situés aux extrémités de l'élément de recouvrement (39), ne s'étendent que sur une partie de la largeur (46) du profilé qui se raccorde à l'intérieur (45) du cadre (35), et les régions des éléments profilés creux de cadre réunis à ces joints à onglets, régions qui se raccordent vers l'extérieur aux joints à onglets (44), se terminent, en éloignement de l'extrémité extérieure (47) des joints à onglets, par des faces terminales planes (49,50) qui s'étendent perpendiculairement à l'axe longitudinal des éléments profilés creux de cadre concernés, et en ce qu'à chacune des plaques de joint (16) qui se trouvent dans les deux joints à onglets (44) situés aux extrémités de l'élément de recouvrement, se raccordent deux parties de plaque (51,52) qui s'étendent à angle droit l'une par rapport à l'autre, qui s'appliquent contre les faces terminales planes (49,50) des éléments profilés creux de cadre qui s'étendent perpendiculairement à l'axe longitudinal de ces éléments, et qui sont assemblées à ces faces terminales (49,50).

7. Cadre de battant selon la revendication 6, caractérisé en ce que le bord (53) des parties de plaque (51,52) suit le bord des faces terminales précitées (49,50) des éléments profilés creux de cadre (36,38,39), au moins sur les faces extérieures ou encore les faces visibles (26) des profilés (36,38,39).

8. Cadre de battant selon la revendication 6 ou 7, caractérisé en ce que les parties de plaque (51,52) sont mutuellement reliées par l'intermédiaire d'un corps de transition profilé (57) qui se trouve entre ces parties de plaque, le profilage de ce corps de transition (57) étant aligné, d'un côté, avec le profilage de l'élément de recouvrement (39) et, de l'autre côté, avec le profilage de l'autre élément profilé creux de cadre (36,38) qui se trouve dans ce coin de recouvrement.

9. Cadre de battant selon l'une des revendications 6 à 8, caractérisé en ce que des appendices, qui sont emboîtés dans les cavités des éléments profilés creux de cadre (36,38,39), partent des parties de plaque qui sont appliquées contre les faces terminales (49,50) de ces éléments profilés.

10. Cadre de battant selon l'une des revendications 6 à 9, dans lequel le profilé creux de cadre est pourvu, du côté tourné vers l'intérieur du cadre (35), de deux baguettes de fixation (60) pour maintenir un vitrage, caractérisé en ce qu'au moins une, et de préférence les deux baguettes de fixation (60), sont insérées à postériori dans les éléments profilés creux qui constituent le cadre.

11. Cadre de battant ou de dormant selon l'une des revendications 1 à 10, caractérisé en ce que la cornière d'assemblage d'angle (12,12a), qui est disposée en un endroit situé sur la périphérie de la section du profilé des deux éléments profilés creux de cadre réunis au coin concerné du battant, repose sur un endroit de la périphérie de la section du profilé qui se trouve sur le côté intérieur du cadre.

12. Procédé de fabrication d'un cadre de battant ou de dormant selon l'une des revendications 1 à 11, caractérisé en ce que les éléments profilés creux de cadre, qui forment entre eux des coins, sont emboîtés avec les cornières d'assemblage d'angles incorporées à une plaque de joint, en ce qu'on injecte ensuite une pâte de collage ou encore d'assemblage durcissable dans les fentes, présentes dans la région du joint d'assemblage ou encore du joint à onglet, entre les éléments profilés creux de cadre et les cornières d'assemblage d'angle et plaques de joint, cette injection étant effectuée par l'ouverture qui se trouve sur la plaque de joint, ou bien, avant ou après l'emboîtement des éléments profilés creux de cadre avec les cornières d'assemblage d'angles, on réalise au moins une ouverture dans les éléments profilés creux de cadre en un endroit situé sur les canaux de la plaque de joint du coin concerné, et on injecte la pâte de collage ou encore d'assemblage par cette ouverture.

13. Procédé selon la revendication 12, caractérisé en ce qu'on injecte une pâte de collage ou encore d'assemblage qui durcit sous l'influence d'un durcisseur, et en ce qu'on applique préalablement un durcisseur sur les faces à assembler, par exemple au pinceau ou par pulvérisation.

14. Procédé selon la revendication 12, caractérisé en ce qu'on injecte simultanément une pâte de collage ou encore d'assemblage durcissable, et un durcisseur ou un accélérateur de durcissement.

15. Procédé selon la revendication 14, caractérisé en ce que l'injection s'effectue par deux ouvertures qui communiquent entre elles.

# FIG.1

# FIG. 2

# FIG. 3

# FIG. 6

# FIG.7

# FIG.8

# FIG.9

FIG.5

16
17a
11a
14a
12a

FIG.4

16
11
14
12
17

14

# FIG.10

# FIG.11

# FIG.12

# FIG.13